# EUROPÄISCHE PATENTANMELDUNG

(11) **EP 4 635 632 A1**
(43) Veröffentlichungstag der Anmeldung: **22.10.2025**
(21) Anmeldenummer: 25168238.1
(22) Anmeldetag: 03.04.2025
(51) Int. Cl.: B05B 1/20, B05B 12/12, E01C 21/00, E01C 23/06

(54) **VERFAHREN ZUM STEUERN DES BETRIEBS EINER FLUIDAUSTRAGEINRICHTUNG EINER BODENFRÄSMASCHINE SOWIE BODENFRÄSMASCHINE**

(30) Priorität: 15.04.2024 DE 102024110520
(71) Anmelder: BOMAG GmbH, 56154 Boppard (DE)
(72) Erfinder: Esch, Andreas, 56154 Boppard (DE); Huhn, Alexander, 56154 Boppard (DE)
(74) Vertreter: Zimmermann & Partner Patentanwälte mbB

(57) **Zusammenfassung**

Die Erfindung betrifft ein Verfahren zum Steuern des Betriebs einer Fluidaustrageinrichtung einer Bodenfräsmaschine sowie eine Bodenfräsmaschine

## Beschreibung

Die Erfindung betrifft ein Verfahren zum Steuern des Betriebs einer Fluidaustrageinrichtung einer Bodenfräsmaschine sowie eine Bodenfräsmaschine.

Bodenfräsmaschinen, insbesondere Stabilisierer zur Stabilisierung von, ganz besonders nicht-tragfähigen, Böden und Recycler zur Wiederherstellung reparaturbedürftiger Straßenbefestigungen, werden häufig dazu genutzt, den Bodenuntergrund in einer Frästiefe aufzufräsen und mit Wasser oder zusätzlichem Einsatz von Bindemitteln, wie Kalk, Zement, Bitumenemulsion, Schaumbitumen oder Zementsuspension, zu vermischen. Dazu kann es vorgesehen sein, dass ein oder mehrere, insbesondere pulverförmige, Zuschlagstoffe durch ein vorausfahrendes Hilfsfahrzeug, beispielsweise einen Bindemittelstreuer, auf der Bodenoberfläche, üblicherweise dosiert, ausgebracht werden. Diese Bodenoberfläche wird anschließend von der Bodenfräsmaschine überfahren, die den oder die Zuschlagstoffe mit dem Bodenuntergrundmaterial vermischt, häufig unter gleichzeitiger Hinzugabe eines Fluids, insbesondere Wasser. Es sind auch Bodenfräsmaschinen bekannt, die den oder die Zuschlagstoffe im laufenden Arbeitsprozess der Bodenfräsmaschine selbst auf der Bodenoberfläche ausbringen und/oder direkt in einen Mischbereich dosieren. Ferner ist es bekannt, insbesondere bei Recyclinganwendungen, die Bodenfräsmaschine mit einer Schaumbitumenanlage zu versehen. Diese ist derart ausgebildet, dass sie Schaumbitumen im laufenden Arbeitsprozess der Bodenfräsmaschine erzeugt und ausbringt.

Um das Bodenmaterial mit dem oder den Zuschlagstoffen vermischen zu können, weisen diese Bodenfräsmaschinen eine Bodenfräseinrichtung mit einem Fräswalzenkasten auf, der einen in Vertikalrichtung nach unten bzw. zum Bodenuntergrund hin offenen Fräswalzenkasteninnenraum umhaust. Im Fräswalzenkasteninnenraum ist eine Fräswalze angeordnet. Bei der Fräswalze kann es sich um ein im Wesentlichen hohlzylindrisches Tragrohr handeln, auf dessen Außenmantelfläche eine Vielzahl von Fräswerkzeugen angeordnet ist. Die Fräswalze ist um eine, typischerweise horizontal und quer zur einer Arbeits- bzw. Vorwärtsrichtung der Bodenfräsmaschine verlaufende, Rotationsachse drehbar und dreht sich im Fräsbetrieb um diese Rotationsachse. Um den Bodenuntergrund auffräsen, zerkleinern und/oder durchmischen zu können, ist die Fräswalze gegenüber dem Bodenuntergrund höhenverstellbar und kann auf diese Weise in unterschiedlichen Frästiefen in den Bodenuntergrund eingreifen. Übliche Größenordnungen des Bodeneingriffs der Fräswalze und damit der Frästiefe sind beispielsweise 30cm und mehr. Dazu umfasst die Bodenfräsmaschine eine oder mehrere Höhenverstelleinrichtungen, beispielsweise in Form von die Fahreinrichtungen mit einem die Fräswalze tragenden Maschinenrahmen verbindenden Hubeinrichtungen, insbesondere Hubsäulen, oder ergänzend oder alternativ in Form einer gegenüber einem Maschinenrahmen der Bodenfräsmaschine höhenverstellbaren Lagereinrichtung, beispielsweise durch stirnseitig der Fräswalze angeordnete Rotorschwenkarme. Der Fräswalzenkasten kann somit mit dem Maschinenrahmen der Bodenfräsmaschine ortsfest verbunden sein oder ebenfalls höhenverstellbar und/oder schwenkbar gegenüber diesem sein. Mit Hilfe des Fräswalzenkastens kann ein kontrollierter Mischraum sichergestellt werden, in dem das aufgefräste Bodenmaterial mit einem oder mehreren Zuschlagstoffen und/oder einem Fluid, insbesondere Wasser und/oder Schaumbitumen, vermischt wird. Tritt das durchmischte Bodenmaterial in Arbeitsrichtung der Bodenfräsmaschine nach hinten aus dem Fräswalzenkasten aus, verbleibt es üblicherweise auf dem Boden und steht für Folgebearbeitungsschritte, beispielsweise Verdichtungsarbeiten etc., zur Verfügung.

Eine Bodenfräsmaschine der vorliegend relevanten Art umfasst ferner eine Fluidaustrageinrichtung. Hierbei handelt es sich um eine Einrichtung, mit der ein Fluid, üblicherweise Wasser und/oder Schaumbitumen, von der Bodenfräsmaschine im laufenden Fräsbetrieb der Bodenfräsmaschine dem Bodenmaterial zugeführt werden kann. Bei dem Fluid handelt es sich somit insbesondere um eine Flüssigkeit und/oder Emulsion und/oder um einen Schaum. Es ist dazu bekannt, dass die Fluidaustrageinrichtung eine oder mehrere, üblicherweise in Form von Fluiddüsen ausgebildete, Fluidauslässe aufweist. Diese können derart positioniert sein, dass das aus ihnen austretende Fluid direkt in den Fräswalzenkasteninnenraum gelangt und damit dem dort erfolgenden Mischprozess unmittelbar zugeführt wird. Die dosierte Zuführung eines oder mehrerer Fluide im laufenden Arbeitsprozess der Bodenfräsmaschine ist besonders wichtig, wenn das Bodenmaterial über den gesamten Arbeitsbereich hinweg einen bestimmten Feuchtigkeitsgehalt aufweisen soll, beispielsweise um effektiv mit den eingemischten Zuschlagstoffen reagieren zu können, und/oder Schaumbitumen aus erhitztem Bitumen und diesem zugeführten Wasser erzeugt werden soll.

Es ist ferner auch bereits bekannt, den Betrieb der Fluidaustrageinrichtung mit Hilfe einer Steuereinrichtung zu Steuern. Steuervorgänge können beispielsweise ein Aktivieren und Deaktivieren der Fluidaustrageinrichtung und/oder eine Veränderung der Austragmenge Fluid pro Zeiteinheit und/oder Streckeneinheit sein.

Die benötigten Fluidmengen können in Abhängigkeit von den Einsatzbedingungen variieren. Bei Recyclinganwendungen wird häufig beispielsweise vergleichsweise wenig Wasser (z. B. ca. 100 - 300 l/min) benötigt, wohingegen bei Stabilisierungsanwendungen beispielsweise häufig 400 - 600 l/min, teilweise aber auch bis zu 1600 l/min von der Fluidaustrageinrichtung in den Arbeitsraum gefördert werden sollen.

Häufig werden Bodenfräsmaschinen, beispielsweise dann, wenn sie einen vorher auf der Bodenoberfläche abgelegten Zuschlagstoff in das Bodenmaterial einmischen sollen, über die gesamte zu bearbeitende Wegstrecke gesehen intervallartig über vergleichsweise kurze Streckenabschnitte eingesetzt, da beispielsweise die Ladekapazitäten der Bindemittelstreufahrzeuge begrenzt sind und/oder der durch Verwehungen austretende Materialverlust möglichst geringgehalten werden soll. Die Bodenfräsmaschinen arbeiten dann diese vergleichsweise kurzen Streckenabschnitte häufig derart ab, dass sie die Gesamtfläche in mehreren parallel zueinander verlaufenden und/oder in eine Bearbeitungsrichtung gesehen aneinander stirnseitig anschließenden Bearbeitungsstreifen überfahren. Die Bearbeitung erfolgt dabei aufgrund der konstruktiven Gestaltung der Fräswalze üblicherweise stets in Vorwärtsrichtung der Bodenfräsmaschine, so dass die Bodenfräsmaschine am Ende eines Bearbeitungsstreifens entweder wenden muss oder rückwärts zurückfährt. Dies bedeutet, dass die Fräswalze vergleichsweise häufig aus der in den Bodenuntergrund eingreifenden Fräsposition in eine gegenüber dem Bodenuntergrund angehobene Transportposition und umgekehrt verstellt werden muss. Ergänzend oder alternativ kann es erforderlich sein, von der Bodenfräsmaschine mitgeführte Betriebsstoffe, wie beispielsweise Fluide, insbesondere Wasser und/oder Bitumen aber auch Kraftstoff, aufzufüllen, wodurch der Arbeitsprozess ebenfalls unterbrochen und wozu die Fräswalze ebenfalls von der in den Bodenuntergrund eingreifenden Fräsposition in die gegenüber dem Bodenuntergrund angehobene Transportposition verstellt wird und anschließend zur Fortsetzung des Arbeitsprozesses erneut in die Fräsposition abgesenkt werden muss.

Der Bereich, an dem die Fräswalze aus der Transportposition heraus in die Fräsposition in eine Frästiefe abgesenkt wird, wird nachfolgend auch als Ansetzstelle bezeichnet. Insbesondere für diesen Bodenbereich und in der Praxis für die sich an diesen Bodenbereich anschließenden ersten Meter (insbesondere 1 m bis 3 m) der Bearbeitungsstrecke, die in diesem Bereich (d.h. der Bereich der Ansetzstelle sowie der sich an diesen Bodenbereich anschließenden ersten paar Meter, insbesondere beispielsweise drei Meter), der auch als Ansetzbereich bezeichnet wird, sind in Bezug auf die gleichmäßige Eindosierung des Fluids im Vergleich zu dem sich an den Ansetzbereich anschließenden Normalfräsbereich, in dem sich die Bodenfräsmaschine üblicherweise mit vergleichsweise konstanten Betriebsparametern, insbesondere hinsichtlich Frästiefe, Fahrgeschwindigkeit und/oder Fluiddosierung pro Zeiteinheit und/oder Streckeneinheit, bewegt, herausfordernd. Anders als im Normalfräsbereich sind die Betriebsparameter hier nicht konstant, da die vorgegebene bzw. definierte Frästiefe durch eine Höhenverstellung der Fräswalze relativ zum Bodenuntergrund aus der Transportposition in die Fräsposition erst erreicht werden muss und der Fluidaustrag sowie der Fahrbetrieb der Bodenfräsmaschine erst aufgenommen werden müssen.

Hiervon ausgehend besteht daher die Aufgabe der Erfindung, eine Möglichkeit zur Verbesserung des Betriebs der Bodenfräsmaschine zu Beginn eines Fräsbetriebs anzugeben.

Die Lösung der Aufgabe gelingt mit einem Verfahren zum Steuern des Betriebs einer Fluidaustrageinrichtung einer Bodenfräsmaschine sowie einer Bodenfräsmaschine gemäß den unabhängigen Ansprüchen. Bevorzugte Weiterbildungen sind in den abhängigen Ansprüchen angegeben.

Ein erster Aspekt der Erfindung betrifft ein Verfahren zum Steuern des Betriebs einer Fluidaustrageinrichtung einer Bodenfräsmaschine zu Beginn eines Fräsbetriebes. Der Fräsbetrieb bezeichnet insbesondere diejenige Betriebsphase, in der eine Fräswalze der Bodenfräsmaschine im Eingriff mit dem Bodenuntergrund steht und dabei Bodenmaterial auffräst, zerkleinert und durchmischt. Der Beginn des Fräsbetriebs bezeichnet insbesondere diejenige Betriebsphase, in der die Fräswalze aus einer gegenüber dem Bodenuntergrund angehobenen Transportposition bei einer Verstellung in eine mit dem Bodenuntergrund in Eingriff stehende Fräsposition abgesenkt wird und die Bodenfräsmaschine ihren Fahrbetrieb in Vorwärts- bzw. in Arbeitsrichtung aufnimmt, bis beispielsweise eine im Wesentlichen konstante Fahrgeschwindigkeit erreicht ist. Sofern sich die Bodenfräsmaschine im Fräsbetrieb befindet und sich gleichzeitig in Arbeits- bzw. Vorwärtsrichtung gegenüber dem Bodenuntergrund bewegt, d.h. sich entlang einer Frässpur bewegt, befindet sich die Bodenfräsmaschine im Arbeitsbetrieb. Die Betriebsphase des Fräsbetriebs, in der sich die Bodenfräsmaschine nicht gegenüber dem Bodenuntergrund bewegt und die Fräswalze um ihre Rotationsachse rotiert, wird als Stillstandbetrieb bezeichnet.

Die Bodenfräsmaschine kann einen von Fahreinrichtungen, insbesondere Rädern und/oder Kettenlaufwerken, getragenen Maschinenrahmen aufweisen. Der Maschinenrahmen bezeichnet insbesondere eine rahmenartige Tragstruktur der Bodenfräsmaschine. Die Fahreinrichtungen können teilweise oder allesamt über Hubeinrichtungen, insbesondere Hubsäulen, mit dem Maschinenrahmen verbunden sein, so dass der Maschinenrahmen und die mit ihm ortsfest verbundenen Elemente der Bodenfräsmaschine gegenüber dem Bodenuntergrund höhenverstellbar sind. Am Maschinenrahmen kann beispielsweise ein Fahrstand gelagert sein, aus dem heraus eine Bedienung der Bodenfräsmaschine durch einen im Fahrstand befindlichen Bediener erfolgen kann. Der Fahrstand kann gegenüber dem Maschinenrahmen gesondert höhenverstellbar ausgebildet sein. Der Maschinenrahmen kann auch ein knickgelenkter Maschinenrahmen mit einem Vorderrahmen und einem Hinterrahmen, die miteinander über eine Knickgelenkeinrichtung verbunden sind, sein. Die Bodenfräsmaschine kann eine die Fahreinrichtungen wenigstens teilweise antreibende Fahrantriebseinrichtung aufweisen. Es können alle der Fahreinrichtungen direkt oder indirekt angetrieben sein. Insbesondere kann es vorgesehen sein, dass einzelne oder alle Fahreinrichtungen jeweils einen hydraulischen oder elektrischen Fahrantriebsmotor aufweisen.

Die Bodenfräsmaschine umfasst eine Bodenfräseinrichtung mit einer innerhalb eines Fräswalzenkasteninnenraums angeordneten, in einem Fräsbetrieb um eine Rotationsachse drehbaren Fräswalze zum Auffräsen und/oder Durchmischen des Bodenuntergrundes. Bei der Fräswalze kann es sich um ein im Wesentlichen hohlzylindrisches Tragrohr handeln, auf dessen Außenmantelfläche eine Vielzahl von Fräswerkzeugen angeordnet ist. Die Fräswalze ist um eine, typischerweise horizontal und quer zur einer Arbeits- bzw. Vorwärtsrichtung der Bodenfräsmaschine verlaufende, Rotationsachse drehbar und dreht sich im Fräsbetrieb um diese Rotationsachse. Die Fräswalze ist zwischen einer aus dem Bodenuntergrund ausgehobenen Transportposition und einer in den Bodenuntergrund eintauchenden Fräsposition verstellbar an der Bodenfräsmaschine angeordnet. In der Transportposition ist die Fräswalze somit eingriffsfrei gegenüber dem Bodenuntergrund. Der Fräswalzenkasten umgibt die Fräswalze zu den Seiten und nach oben und bildet einen Mischraum, in dessen Innenraum die Fräswalze im Fräsbetrieb Bodenmaterial zerkleinern und/oder mit einem oder mehrere Fluiden und/oder pulverförmigen Zuschlagstoffen vermengen kann. Der Fräswalzenkasten kann wenigstens teilweise mit dem Maschinenrahmen fest verbunden sein oder alternativ gegenüber dem Maschinenrahmen höhenverstellbar ausgebildet sein. Die Höhenverstellung des Fräswalzenkastens kann zumindest innerhalb eines definierten Bereiches unabhängig von der Höhenverstellung der Fräswalze erfolgen. Ferner können am Fräswalzenkasten verstellbar gelagerte Wandelemente, wie beispielsweise eine Frontklappe, Seitenschilde und/oder eine Abstreifklappe, von dem Fräswalzenkasten umfasst sein.

Die Bodenfräsmaschine umfasst ferner die Fluidaustrageinrichtung. Die Fluidaustrageinrichtung bezeichnet eine Einrichtung, die das Ausbringen von Fluid durch die Bodenfräsmaschine ermöglicht. Das Fluid kann insbesondere Wasser und/oder Schaumbitumen sein. Es ist besonders bevorzugt, wenn das Fluid von der Fluidaustrageinrichtung in den Innenraum des Fräswalzenkastens der Bodenfräseinrichtung ausgebracht wird. Die Fluidaustrageinrichtung umfasst eine Fluidquelle. Die Fluidquelle bezeichnet insbesondere eine Stelle oder einen Bereich der Bodenfräsmaschine, über den die Fluidversorgung im laufenden Fräsbetrieb erfolgt. Bei der Fluidquelle kann es sich beispielsweise um einen von der Bodenfräsmaschine mitgeführten Fluidtank, insbesondere Wassertank, handeln. Dieser kann typischerweise ein Aufnahmevolumen von mehr als 500L, insbesondere von mehr als 800L, aufweisen. Ergänzend oder alternativ kann die Fluidquelle aber auch ein Fluidversorgungsanschluss sein, über den die Fluidaustrageinrichtung zum Bezug des Fluids mit einem externen Versorgungsfahrzeug, beispielsweise einem Wasserwagen, einem Bitumenwagen etc., fluidleitend verbunden werden kann bzw. im laufenden Arbeitsbetrieb verbunden ist. Dieser kann mit der Bodenfräsmaschine über eine Schub- oder Zugstange verbunden sein und von diesem im Arbeitsbetrieb gezogen/gedrückt werden.

Die Fluidaustrageinrichtung umfasst ferner eine Fluidauslasseinrichtung. Die Fluidauslasseinrichtung bezeichnet insbesondere diejenige Stelle oder Stellen, an denen das Fluid aus der Fluidaustrageinrichtung, insbesondere in den Fräswalzenkasteninnenraum und/oder die Außenumgebung, austritt. Dazu kann es vorgesehen sein, dass die Fluidauslasseinrichtung eine oder mehrere Austrittsstellen, beispielsweise Auslassöffnungen aus einer Fluidförderleitung und/oder eine oder mehrere Fluiddüsen, aufweist. Fluiddüsen sind insofern vorteilhaft, als dass durch die Düsen selbst beispielsweise ein aufgefächerter Fluidaustrittsstrahl erzeugbar ist, über den eine gleichmäßigere Verteilung des Fluids beim Austritt aus der Auslassöffnung möglich ist. Die Fluidaustrageinrichtung kann beispielsweise mehrere Sprühdüsen umfassen. Diese können beispielsweise entlang eines oder mehrerer, insbesondere im Fräswalzenkasteninnenraum angeordneter oder zumindest in den Fräswalzenkasteninnenraum gerichteter, Sprühbalken angeordnet sein.

Teil der Fluidaustrageinrichtung ist ferner eine Fluidförderpumpe, die in einem Förderbetrieb Fluid von der Fluidquelle in Richtung zur Fluidauslasseinrichtung über eine Fluidförderleitung fördert. Bei der Fluidförderpumpe kann es sich beispielsweise eine Strömungspumpe oder auch eine Verdrängerpumpe handeln. Die Fluidförderpumpe kann somit insbesondere eine Rotationskolbenpumpe (beispielsweise Zahnradpumpe oder Drehkolbenpumpe), eine Membranpumpe, eine Exzenterschneckenwellenpumpe, eine Kreiselpumpe oder ähnliches sein. Die Fluidförderpumpe ist zwischen dem Förderbetrieb, in dem sie Fluid von der Fluidquelle in Richtung zur Fluidauslassenrichtung fördert, und einem inaktiven Zustand, in dem sie stillsteht und/oder zumindest kein Fluid fördert, verstellbar. Die Fluidförderpumpe kann ferner derart ausgebildet sein, dass im Förderbetrieb einer oder mehrere ihrer Betriebsparameter, wie beispielsweise ihre Förderleistung, insbesondere ihre Drehzahl und/oder ihr Schluckvolumen, innerhalb definierter Bereiche schrittweise oder stufenlos variabel ist. Die Fluidförderleitung stellt eine fluidleitende Verbindung zwischen der Fluidquelle und der Fluidauslasseinrichtung her. Dabei kann es sich um eine Rohr- und/oder Schlauchleitung handeln. Es können Verzweigungen und/oder Abzweigungen mit umfasst sein. Insbesondere ist es auch möglich, dass die Fluidförderleitung stromabwärts der Fluidförderpumpe eine oder mehrere Abzweigungen aufweist, beispielsweise, um von der Fluidförderpumpe gefördertes Fluid auf zueinander getrennte Leitungsabschnitte zu verteilen und damit verschiedenen Austrittsstellen der Fluidauslasseinrichtung zuzuführen. Die Fluidförderleitung bezeichnet somit insgesamt das Fluidleitungssystem, insbesondere stromabwärts bzw. in Förderrichtung der Fluidförderpumpe bis hin zur Fluidauslasseinrichtung.

Schließlich umfasst die Fluidaustrageinrichtung eine Ventileinrichtung in einem Förderbereich der Fluidförderleitung zwischen der Fluidförderpumpe und der Fluidauslasseinrichtung. Die Ventileinrichtung kann ein oder mehrere Einzelventile umfassen, die insbesondere derart ausgebildet sind, dass sie den Fluiddurchfluss von der Fluidförderpumpe zur Fluidauslasseinrichtung unterbrechen bzw. sperren oder freigeben. Die Ventileinrichtung ist somit zwischen einer Sperrstellung, in der eine Fluidverbindung von der Fluidförderpumpe hin zur Fluidauslasseinrichtung gesperrt ist, und einer Auslassstellung, in der eine Fluidverbindung von der Fluidförderpumpe bis hin zur Fluidauslasseinrichtung freigegeben ist und entsprechend Fluid von der Fluidförderpumpe bis hin zu Fluidauslasseinrichtung förderbar ist und dort aus der Fluidauslasseinrichtung austritt, verstellbar.

Die für den Betrieb der Bodenfräsmaschine, insbesondere auch für den Antrieb der Fahrantriebseinrichtung, der Bodenfräseinrichtung und/oder die Fluidaustrageinrichtung benötigte Antriebsenergie kann durch einen oder mehrere Motoren, insbesondere beispielsweise einen Verbrennungsmotor als Primärantriebsaggregat und/oder durch einen oder mehrere Elektromotoren, bereitgestellt werden.

Es kann vorgesehen sein, dass die Bodenfräsmaschine eine Steuereinrichtung umfasst, die zur Steuerung eines oder mehrerer der vorstehend beschriebenen Elemente der Fluidaustrageinrichtung, insbesondere der Fluidförderpumpe und der Ventileinrichtung, ausgebildet ist. Dazu kann es vorgesehen sein, dass die Steuereinrichtung über geeignete Signalübertragungsleitungen mit diesen Elementen der Fluidaustrageinrichtung verbunden ist. Bei der Steuereinrichtung kann es sich insbesondere um eine Computereinrichtung handeln.

Ausgehend von insbesondere einer vorstehend beschriebenen Bodenfräsmaschine ist es für das erfindungsgemäße Verfahren nun vorgesehen, dass in einem Schritt I.) ein Positionieren der in der Transportposition befindlichen Fräswalze an einer Ansetzstelle erfolgt. Dies bedeutet, dass die Fräswalze bzw. die Bodenfräsmaschine mit der Fräswalze auf bzw. oberhalb der Bodenoberfläche derart positioniert wird, dass sie in einem vorgegebenen Bereich des zu bearbeitenden Bodens aus der Transportposition in die Fräsposition verstellt werden kann, üblicherweise abgesenkt werden kann, und dadurch in einen Bodeneingriff gelangt. Soll eine zu bearbeitende Bodenfläche beispielsweise in mehreren sich jeweils über eine Länge der Bodenfläche erstreckenden Bearbeitungsstreifen bearbeitet werden, wählt beispielsweise ein Bediener der Bodenfräsmaschine typischerweise einen stirnseitigen Randbereich der zu bearbeitenden Bodenfläche als Ansetzstelle aus. Besteht das Arbeitsareal aus mehreren sich in Längsrichtung aneinander sukzessive anschließenden Bodenflächensegmenten, wird die Ansetzstelle somit üblicherweise in dem Bereich gewählt, der sich an die Endkante eines bereits bearbeiteten Bodenflächensegment anschließt. Unabhängig davon bezeichnet die Ansetzstelle somit diejenige Stelle bzw. denjenigen Bereich des zu bearbeitenden Bodens, an der bzw. in dem die Fräswalze aus der Transportposition heraus bei einem Verstellen in die Fräsposition in den Bodenuntergrund eingreifen wird.

Während des Schritts I.) oder danach erfolgt in einem Schritt II.) ein Aktivieren des Fräsbetriebes der in Transportposition befindlichen Fräswalze, d.h. die Fräswalze wird in Rotation um ihre Rotationsachse versetzt. Dies kann durch ein Aktivieren eines Fräswalzenantriebsmotors, beispielsweise eines Hydraulik- oder Elektromotors, und/oder durch ein Einkuppeln eines zu einem Primärantriebsaggregat, beispielsweise einem Verbrennungsmotor, verlaufenden Antriebsstranges erfolgen.

Es ist nun vorgesehen, dass in einem Schritt III.) ein Absenken der Fräswalze aus der Transportposition in die Fräsposition bis in eine definierte Frästiefe erfolgt. Dabei gelangt die rotierende Fräswalze somit in einen Eingriff mit dem Boden und fräst Bodenuntergrundmaterial auf. Die definierte Frästiefe bezeichnet eine, beispielsweise durch einen Bediener und/oder eine automatische Frästiefensteuerung, vorgegebene Frästiefe. Dies bedeutet nicht, dass die Fräswalze nur hin zu einer bestimmten Frästiefe abgesenkt werden kann. Üblicherweise kann die Frästiefe, beispielsweise auch abhängig von der Werkzeugbestückung der Fräswalze, in einem Bereich von >0 cm bis hin zu einer maximalen Frästiefe, beispielsweise maximal 65 cm, frei gewählt und eingestellt werden. Die definierte Frästiefe bezeichnet somit eine aktuelle Soll-Frästiefe. Die Bodenfräsmaschine befindet sich dabei insbesondere im Stillstandbetrieb, d.h. die Fräswalze rotiert um ihre Rotationsachse, fräst Bodenmaterial auf und/oder bewegt dieses, die Bodenfräsmaschine an sich bewegt sich aber noch nicht in Arbeits- bzw. Vorwärtsrichtung.

Im Laufe der Schritte I.) bis III.), ganz besonders während des Schrittes III.), und/oder bei Erreichen der definierten und/oder vorgegebenen Frästiefe erfolgt in einem Schritt IV.) ein Aktivieren des Förderbetriebes der Fluidförderpumpe bei gleichzeitig in Sperrstellung befindlicher Ventileinrichtung. Die Fluidförderpumpe fördert bzw. drückt somit Fluid in die Fluidförderleitung, ohne dass gleichzeitig Fluid aus der Fluidförderleitung über die Fluidauslasseinrichtung abgelassen wird. Dies erfolgt somit insbesondere während die Fräswalze im Fräsbetrieb bei stehender Maschine in den Bodenuntergrund in der Frästiefe eintaucht. Auf diese Weise wird innerhalb der Fluidförderleitung ein Fluiddruck aufgebaut, während die Fräswalze rotiert und im Bodeneingriff steht, ohne dass dabei Fluid auf der Fluidaustrageinrichtung austritt. Die Fluidaustrageinrichtung wird mit anderen Worten im Bereich stromabwärts der Fluidförderpumpe in Richtung zur Fluidauslasseinrichtung, konkret bis hin zur in Sperrstellung befindlichen Ventileinrichtung, insbesondere hydraulisch, vorgespannt.

Während der Schritte I.) bis IV.) befindet sich die Bodenfräsmaschine idealerweise im Stillstandbetrieb bzw. auf der Stelle und bewegt sich somit nicht in Arbeits- bzw. Vorwärtsrichtung. Sie hat mit anderen Worten noch keinen Fahrbetrieb aufgenommen. Im Schritt V.), konkret somit zeitlich nach den Schritten I.) bis IV.), erfolgt nun ein Umschalten der Ventileinrichtung von der Sperrstellung in die Freigabestellung in Abhängigkeit von einer Aufnahme eines Fahrbetriebs der Bodenfräsmaschine. Das Umschalten erfolgt somit während die Fräswalze sich im Fräsbetrieb befindet, dabei rotiert und im Bodeneingriff steht. Die Freigabe der Ventileinrichtung während des Fräsbetriebs erfolgt mit anderen Worten in Abhängigkeit von einem Wechsel der Bodenfräsmaschine von dem Stillstandbetrieb hin zum Arbeitsbetrieb. Dies bedeutet, dass die Umschaltung der Ventileinrichtung in die Freigabestellung und damit ein Austragen bzw. Ausbringen von Fluid über die Fluidauslasseinrichtung dann aufgenommen wird, wenn die Bodenfräsmaschine beginnt, sich während des Fräsbetriebs in Arbeits- bzw. Vorwärtsrichtung zu bewegen bzw. ihren Fahrbetrieb aufnimmt. Dadurch, dass die Fluidaustrageinrichtung, wie vorstehend beschrieben, vorgespannt ist, tritt in dieser Phase schlagartig Fluid aus der Fluidauslasseinrichtung aus bzw. es wird praktisch umgehend die für den Normalbetrieb gewünschte Fördermenge pro Zeiteinheit bereitgestellt. Es ist auch möglich, dass zunächst ein vom Austragvolumen des Fluids her vergleichsweise großer Austragsschwall, beispielsweise ermöglicht durch in der Fluidförderleitung und/oder der Fluidförderpumpe bereitgestellte Elastizitäten oder ähnliches, auftritt. Es wird auf diese Weise somit ein Fluidstoß erzeugt, so dass fast schlagartig ein bestimmtes Fluidvolumen aus der Fluidaustrageinrichtung austritt, insbesondere in den Innenraum des Fräswalzenkastens. Das von diesem Fluidstoß umfasste Fluidvolumen wird umgehend in den Bodenuntergrund von der Fräswalze eingearbeitet, die sich bereits im Fräsbetrieb in der definierten Frästiefe befindet. Bei einer fortgesetzten Bodenbearbeitung erfolgt an diesen Fluidstoß anschließend ein durch die Fluidförderpumpe erzeugter konstanter Förderbetrieb.

Insgesamt wird auf diese Weise im Bereich der Ansetzstelle verhindert, dass für den Anfangsbereich der Frässtrecke zu wenig Fluid in den Bodenuntergrund eingearbeitet wird, da das gewünschte Fluidfördervolumen durch das erwähnte Vorspannen der Fluidaustrageinrichtung praktisch sofort mit der Aufnahme des Fahrbetriebs in vollem Umfang steht.

Es ist besonders bevorzugt, wenn das Austragen von Fluid durch die Fluidauslasseinrichtung direkt in den Fräswalzenkasteninnenraum erfolgt. Auf diese Weise kann das Fluid dem innerhalb des Fräswalzenkasteninnenraums erfolgenden Mischprozess unmittelbar beigefügt werden. Ferner erfolgt der zumindest nahezu vollständige Fluideintrag insbesondere bei der Aufnahme des Arbeitsbetriebs bereits zu Anfang am Beginn einer Frässpur.

Es ist möglich, wenn, insbesondere vor oder während einem oder mehreren der Schritte I. bis III, ein manuelles Vorgeben oder ein Ermitteln einer Normaldosiervorgabe erfolgt, insbesondere eines Normalfluidstroms oder einer Vorgabe in "Fluidvolumen pro Meter Bodenuntergrund", d.h. insbesondere einer zeit- und/oder wegstreckenabhängigen Normaldosiervorgabe. Hierbei kann es sich beispielsweise im eine prozentuale Vorgabe handeln, konkret wie viel Prozent Fluid dem Boden hinzugefügt werden sollen. Ferner besteht häufig eine Bauleitungsvorgabe in Masse pro Quadratmeter Zuschlagstoff und Massenprozent Fluidzugabe. Es kann ferner eine Dichte eingestellt werden. Unter Berücksichtigung der Fräsbreite , der Frästiefe und der (geplanten) Fahrgeschwindigkeit kann dann ein Fluidmassenstrom pro Zeiteinheit ermittelt werden. Dieser kann auch die Regelgröße einer Steuerung sein. Die Normaldosiervorgabe bezeichnet somit eine dahingehende Steuervorgabe, wie viel Fluid im Arbeitsbetrieb der Bodenfräsmaschine pro Zeiteinheit und/oder pro Wegstreckeneinheit von der Fluidaustrageinrichtung in den Bodenuntergrund abgegeben werden soll. Hiervon ausgehend kann es nun vorgesehen sein, dass, beispielsweise durchgeführt durch eine Steuereinrichtung, ein Ermitteln einer Startdosiervorgabe bzw. einer anfänglichen Sättigungsdosis, insbesondere eines Startfluidstroms, und/oder eines Vorspanndruckes in Abhängigkeit von der definierten und/oder vorgegebenen Frästiefe und/oder der Normaldosiervorgabe erfolgt. Die Startdosiervorgabe kann von der Normaldosiervorgabe abweichen und kann insbesondere größer als die Normaldosiervorabe sein. In einem Schritt VI.) erfolgt ein Wechseln von einem Betrieb der Fluidaustrageinrichtung mit einem Fluidaustrag gemäß Startdosiervorgabe in einen Betrieb der Fluidaustrageinrichtung mit einem Fluidaustrag gemäß Normaldosiervorgabe. Der Wechsel kann sprunghaft, insbesondere aber auch fließend sein.

Durch das vorstehend genannte Vorspannen wenigstens eines Bereiches der Fluidförderleitung zwischen der Fluidförderpumpe und der Fluidaustrageinrichtung, insbesondere einem oder mehreren Fluidventilen der Ventileinrichtung, steigt der Innendruck innerhalb der Fluidförderleitung. Es kann vorgesehen sein, dass eine Druckbegrenzungseinrichtung in dem Förderbereich der Fluidförderleitung zwischen der Fluidförderpumpe und der Fluidauslasseinrichtung vorhanden ist. Eine Druckbegrenzungseinrichtung kann beispielsweise ein Druckbegrenzungsventil oder ähnliches sein. Mithilfe der Druckbegrenzungseinrichtung kann gewährleistet werden, dass der Innendruck innerhalb der Fluidförderleitung zwischen der Fluidförderpumpe und der Fluidaustrageinrichtung nur bis hin zu einem definierten und vorgegebenen maximalen Druckwert ansteigt. Es kann insbesondere vorgesehen sein, dass bei einem Überschreiten eines durch die Druckbegrenzungseinrichtung vorgegebenen Druckschwellenwertes eine oder mehrere Maßnahmen getroffen werden, um einem weiteren Anstieg des Innendruckes entgegenzuwirken. Bei einem Überschreiten eines von der Druckbegrenzungseinrichtung vorgegebenen Druckschwellenwertes kann beispielsweise der Förderbetrieb der Fluidförderpumpe reduziert oder gestoppt werden. Ergänzend oder alternativ ist es möglich, dass von der Fluidförderpumpe gefördertes Fluid über eine Bypass-Leitung aus der Fluidförderleitung abgeleitet bzw. abgeleitet wird. In diesem Fall kann die Fluidförderpumpe somit weiterhin Fluid fördern, ohne dass der Innendruck innerhalb der Fluidförderleitung weiter ansteigt. Es ist möglich, dass über die Druckbegrenzungseinrichtung aus der Fluidförderleitung im Bereich zwischen der Fluidförderpumpe und der Fluidfördereinrichtung abgeführtes Fluid über eine Rückführleitung in eine als Fluidtank, insbesondere als Fluidtank der Bodenfräsmaschine, ausgebildete Fluidquelle zurückgeleitet wird.

Die Druckbegrenzungseinrichtung kann derart ausgebildet sein, dass sie beim Überschreiten eines festgelegten definierten Druckschwellenwertes, beispielsweise in der vorstehend beschriebenen Weise, auslöst. Es kann aber auch vorgesehen sein, dass die Druckbegrenzungseinrichtung derart ausgebildet ist, dass ihr Druckschwellenwert veränderbar ist. Dazu kann die Druckbegrenzungseinrichtung beispielsweise manuell oder von einer Steuereinrichtung hinsichtlich eines aktuellen Druckschwellenwertes, beispielsweise abhängig von einem Betriebsparameter der Bodenfräsmaschine, insbesondere abhängig von einer vorgegebenen Frästiefe, gesteuert werden. Es kann somit vorgesehen sein, dass ein Verändern des Druckschwellenwertes in Abhängigkeit von einer definierten und/oder vorgegebenen Frästiefe erfolgt. Insbesondere erfolgt dies derart, dass der vorgegebene Druckschwellenwert bei steigender Frästiefe ansteigt.

Für das erfindungsgemäße Verfahren ist es möglich, dass ein Messen des Innendruckes der Fluidförderleitung im Bereich zwischen der Fluidförderpumpe und der Fluidfördereinrichtung erfolgt. Dazu können ein oder mehrere Fluiddrucksensoren vorhanden sein, die mit der Steuereinrichtung in Signalübertragungsverbindung stehen.

Es bestehen verschiedenen Möglichkeiten, den Wechsel der Bodenfräsmaschine innerhalb der Fräsbetriebs vom Stillstandbetrieb in den Arbeitsbetrieb zu ermitteln. Dies kann beispielsweise mithilfe eines beim Betrieb der Bodenfräsmaschine auftretenden intrinsischen Indikators erfolgen, beispielsweise abhängig von einem Fahrsteuerbefehl, insbesondere einer Fahrhebelauslenkung, und/oder einer Fahreinrichtungsbewegung. Es versteht sich, dass dazu ein oder mehrere geeignete Sensoren vorhanden sein können, um beispielsweise eine Fahrhebelauslenkung und/oder eine Bewegung einer oder mehrerer der Fahreinrichtungen direkt oder indirekt zu ermitteln. Ergänzend oder alternativ ist es aber auch möglich, den Wechsel der Bodenfräsmaschine innerhalb der Fräsbetriebs vom Stillstandbetrieb in den Arbeitsbetrieb mithilfe eines beim Betrieb der Bodenfräsmaschine auftretenden extrinsischen Indikators zu ermitteln, beispielsweise mithilfe einer Einrichtung, die eine tatsächliche Bewegung der Bodenfräsmaschine relativ zu Bodenuntergrund detektiert, beispielsweise mithilfe einer Kamera und/oder eines Bodentasters.

Das Ausmaß, inwieweit eine Vorspannung des Bereiches der Fluidförderleitung zwischen der Fluidförderpumpe und der Fluidaustrageinrichtung erfolgt, kann ebenfalls variieren. Dies kann sich auf im Wesentlichen eine reine Druckerhöhung beschränken, insbesondere dann, wenn das Fluidleitungssystem im Wesentlichen starre Rohrleitungen umfasst. Das von der Fluidförderleitung aufgenommene Fluidvolumen im Bereich zwischen der Fluidförderpumpe und der Fluidaustrageinrichtung im vorgespannten Zustand entspricht dabei im Wesentlichen dem diesem Bereich der Fluidförderleitung aufgenommenen Fluidvolumen im Normalbetrieb. Es kann aber auch vorgesehen sein, dass mit dem Erhöhen des Druckes innerhalb der Fluidförderleitung ein signifikantes zusätzliches Fluidvolumen von diesem Bereich aufgenommen wird. Dies kann beispielsweise mithilfe wenigstens teilweise vorhandener elastischer Leitungsabschnitte und/oder spezieller, für diesen Zweck vorgesehener Aufnahmespeicher erfolgen. Insgesamt kann es im Schritt IV.) demnach vorgesehen sein, dass im Förderbereich der Fluidförderleitung zwischen der Fluidförderpumpe und der Fluidauslasseinrichtung ein Befüllen eines Fluiddruckspeichers erfolgt, und dass im Schritt V.) zusätzlich zum Fördern von Fluid durch die Fluidförderpumpe hin zur Fluidaustrageinrichtung ein Entleeren des Fluiddruckspeichers erfolgt. Auf diese Weise tritt beispielsweise bei konstantem Förderbetrieb der Fluidförderpumpe unmittelbar nach dem Umschalten des Fräsbetriebes von dem Stillstandbetrieb in den Arbeitsbetrieb zunächst ein vergleichsweise größerer Volumenstrom aus der Fluidaustrageinrichtung aus, der anschließend zum von der Fluidförderpumpe allein geförderten Fluidstrom abfällt. Insgesamt kann auf diese Weise beim Umschalten von dem Stillstandbetrieb in den Arbeitsbetrieb ein aus der Fluidaustrageinrichtung austretender Anfangsschwall erzeugt werden, um bereits zu Beginn einer Frässpur eine ausreichend hohe Fluidkonzentration im Fräsgut zu gewährleisten.

Häufig handelt es sich bei dem in das Fräsgut über die Fluidaustrageinrichtung ausgebrachten Fluid um Wasser. Dies kann insbesondere dazu genutzt werden, um mit in das Fräsgut eingemischten pulverförmigen Zuschlagstoffen, beispielsweise Kalk oder Zement, zu reagieren. Es sind allerdings auch Anwendungen, insbesondere im Recyclingbereich, bekannt, bei denen Schaumbitumen von der Bodenfräsmaschine erzeugt und in das Fräsgut eingemischt wird. Entsprechend kann es vorgesehen sein, dass die Bodenfräsmaschine zur Erzeugung von Schaumbitumen ausgebildet ist und zwei Fluidaustrageinrichtungen umfasst, konkret eine Fluidaustrageinrichtung für Wasser und eine Fluidaustrageinrichtung für Bitumen. Die beiden Fluidaustrageinrichtungen münden mit ihren Fluidauslasseinrichtungen in eine oder auch mehrere Mischkammern, in der/denen dann das Schaumbitumen durch Reaktion dieser beiden Fluide miteinander erzeugt wird. Die eine oder mehreren Mischkammern weisen einen Schaumbitumenauslass auf, insbesondere in den Fräswalzenkasteninnenraum. Für das erfindungsgemäße Verfahren kann es nun insbesondere vorgesehen sein, dass die zwei Fluidaustrageinrichtungen beide gemäß einem der vorstehend beschriebenen erfindungsgemäßen Verfahren gesteuert werden.

Ein weiterer Aspekt der Erfindung betrifft eine Bodenfräsmaschine, insbesondere eine Bodenfräsmaschine, die zur Durchführung eines vorstehend beschriebenen erfindungsgemäßen Verfahrens ausgebildet ist.

Die erfindungsgemäße Bodenfräsmaschine umfasst einen von Fahreinrichtungen getragenen Maschinenrahmen, eine die Fahreinrichtungen wenigstens teilweise antreibende Fahrantriebseinrichtung, eine Bodenfräseinrichtung mit einer innerhalb eines Fräswalzenkasteninnenraums angeordneten, in einem Fräsbetrieb um einer Rotationsachse drehbaren Fräswalze zum Auffräsen und Durchmischen des Bodenuntergrundes, wobei die Fräswalze zwischen einer aus dem Bodenuntergrund ausgehobenen Transportposition und einer in den Bodenuntergrund eintauchenden Fräsposition verstellbar ist.

Teil der erfindungsgemäßen Bodenfräsmaschine ist ferner eine Fluidaustrageinrichtung, umfassend eine Fluidquelle, eine Fluidauslasseinrichtung, eine Fluidförderpumpe, die in einem Förderbetrieb Fluid von der Fluidquelle in Richtung zur Fluidauslasseinrichtung über eine Fluidförderleitung fördert, sowie eine Ventileinrichtung in einem Förderbereich der Fluidförderleitung zwischen der Fluidförderpumpe und der Fluidauslasseinrichtung, wobei die Ventileinrichtung zwischen einer Sperrstellung und einer Auslassstellung verstellbar ist.

Hinsichtlich weiterer Details und Merkmale zur möglichen Ausgestaltung der Bodenfräsmaschine wird insbesondere auch zu den die Bodenfräsmaschine und deren mögliche Ausgestaltung betreffenden Angaben im Zusammenhang mit der Beschreibung des erfindungsgemäßen Verfahrens verwiesen. Diese werden hiermit für die erfindungsgemäße Bodenfräsmaschine mit in Bezug genommen.

Die erfindungsgemäße Bodenfräsmaschine kann eine Steuereinrichtung umfassen, die zur Steuerung des Betriebs der Fluidaustrageinrichtung gemäß dem erfindungsgemäßen Verfahren wie vorstehend beschrieben ausgebildet ist.

Die Bodenfräsmaschine kann einen Fahrbetriebssensor, insbesondere einen Fahrhebelpositionssensor und/oder einen Fahreinrichtungsbewegungssensor, aufweisen, der zur Ermittlung des Einleitens und/oder Vorliegens eines Fahrbetriebes ausgebildet ist. Der Fahrhebelpositionssensor ermittelt direkt oder indirekt eine aktuelle Position eines Fahrhebels der Bodenfräsmaschine, über den ein Bediener der Bodenfräsmaschine den Fahrbetrieb der Bodenfräsmaschine steuern kann. Dies kann beispielsweise ein Joystick sein. Der Fahrbetriebssensor kann auch ein Fahreinrichtungsbewegungssensor sein, der zur direkten oder indirekten Ermittlung einer Fahrbewegung einer oder mehrerer der Fahreinrichtungen ausgebildet ist, beispielsweise ein Drehzahl- und/oder Drehrichtungssensor. Der Fahrbetriebssensor kann ergänzend oder alternativ auch derart ausgebildet sein, dass er eine tatsächliche Fahrbewegung der Bodenfräsmaschine, insbesondere in Arbeits- bzw. Vorwärtsrichtung, relativ zur Außenumgebung, insbesondere der Bodenoberfläche, erfasst. Dies kann beispielsweise eine Kamera sein, die mithilfe eines geeigneten Bildauswertecomputerprogramms ausgebildet ist, beispielsweise mithilfe eines Bildvergleiches zweier zeitlich nacheinander aufgenommener Bilder, eine Relativbewegung der Bodenfräsmaschine relativ zur Außenumgebung zu detektieren und zu überwachen. Es ist vorzugsweise eine Signalübertragungsverbindung vorhanden, über die der eine oder die mehreren Fahrbetriebssensoren die von ihnen erfassten und/oder überwachten Frästiefendaten an die Steuereinrichtung übermitteln

Die Bodenfräsmaschine kann ergänzend oder alternativ einen oder mehrere Frästiefensensoren aufweisen, der/die zur Ermittlung einer definierten und/oder vorliegenden Frästiefe ausgebildet ist/sind. Der wenigstens eine Frästiefensensor kann somit zur Erfassung einer vorgegebenen Frästiefe und/oder zur Erfassung einer tatsächlich vorliegenden Frästiefe ausgebildet sein. Der Frästiefensensor kann dazu beispielsweise ein Abstandssensor sein, der den Abstand einer ortsfest zur Rotationsachse der Fräswalze positionierten Referenzstelle zum Bodenuntergrund ermittelt und/oder überwacht. Ergänzend oder alternativ kann der Frästiefensensor auch ein Wegmesssensor einer Hubeinrichtung der Fräseinrichtung sein, deren Hubverstellung direkt oder indirekt eine Veränderung der aktuellen Frästiefe bewirkt bzw. mit dieser korreliert. Es ist weiter ergänzend oder alternativ möglich, dass der Frästiefensensor eine oder mehrere Tasteinrichtungen aufweist, deren Tastlage und/oder deren Differenztastlage als Maß für eine aktuelle Frästiefe herangezogen werden kann. Es ist vorzugsweise eine Signalübertragungsverbindung vorhanden, über die der eine oder die mehreren Frästiefensensoren die von ihnen erfassten und/oder überwachten Frästiefendaten an die Steuereinrichtung übermitteln.

Die Bodenfräsmaschine kann einen oder mehrere Fluiddrucksensoren umfassen, der/die derart ausgebildet ist/sind, dass mit ihm/ihnen ein in einem oder mehreren Bereichen der Fluidförderleitung zwischen der Fluidförderpumpe und dem Fluidauslasseinrichtung bestehender Fluiddruck erfassbar ist. Es ist vorzugsweise eine Signalübertragungsverbindung vorhanden, über die der eine oder die mehreren Fluiddrucksensoren die von ihnen erfassten und/oder überwachten Frästiefendaten und/oder Fräsdruckdaten an die Steuereinrichtung übermitteln.

Die Bodenfräsmaschine kann derart ausgebildet sein, dass in einem Bereich der Fluidförderleitung zwischen der Fluidförderpumpe und der Fluidauslasseinrichtung, insbesondere der Ventileinrichtung, eine, insbesondere von der Steuereinrichtung gesteuerte, Druckbegrenzungseinrichtung vorhanden ist. Weiter ergänzend werden die Merkmale zur möglichen Ausbildung und Steuerung der Druckbegrenzungseinrichtung gemäß den vorhergehenden Angaben zum erfindungsgemäßen Verfahren in Bezug genommen.

Es kann eine Bypass-Leitung vorhanden sein, über die Fluid aus einem Bereich der Fluidförderleitung zwischen der Fluidförderpumpe und dem Fluidauslass, insbesondere unter Rückführung zur Fluidquelle, ablassbar ist. Die Bypass-Leitung kann insbesondere derart ausgebildet sein, dass sie von einer Druckbegrenzungseinrichtung abzweigt und auf diese Weise einen Fluidstrom innerhalb der Fluidförderleitung ermöglicht, ohne dass dabei Fluid aus der Fluidauslasseinrichtung in die Außenumgebung abgelassen wird.

Die Bodenfräsmaschine kann eine Steuereinrichtung umfassen, insbesondere zur Steuerung der Fluidaustrageinrichtung, ganz besonders zur Steuerung der Fluidförderpumpe und der Fluidauslasseinrichtung, insbesondere der Ventileinrichtung, und, sofern vorhanden, der Druckbegrenzungseinrichtung. Es kann vorgesehen sein, dass die Steuereinrichtung eine Berechnungseinheit aufweist, die zum Berechnen einer Normaldosiervorgabe und/oder einer Startdosiervorgabe und/oder eines Druckschwellenwertes in Abhängigkeit von einer definierten und/oder vorgegebenen Frästiefe ausgebildet ist. Eine Dosiervorgabe kann insbesondere ein Druckwert innerhalb der Fluidförderleitung, ganz besonders im Bereich zwischen der Fluidförderpumpe und der Fluidauslasseinrichtung, ein Fördervolumen bzw. Schluckvolumen der Fluidförderpumpe, eine Drehzahl der Fluidförderpumpe etc. sein. Die Startdosiervorgabe bezeichnet insbesondere eine Dosiervorgabe, die spätestens zu dem Zeitpunkt des Umschaltens von dem Stillstandbetrieb in den Arbeitsbetrieb der Bodenfräsmaschine vorliegen soll. Die Normaldosiervorgabe bezieht sich auf eine Dosiervorgabe, die im laufenden Arbeitsbetrieb der Bodenfräsmaschine erreicht werden und während des Arbeitsbetriebs anschließend aufrechterhalten werden soll.

Die Erfindung wird nachstehend anhand der in den Figuren gezeigten Ausführungsbeispiele näher erläutert. Es zeigen schematisch:
- Fig. 1: eine Seitenansicht auf eine Bodenfräsmaschine;
- Fig. 2: eine Prinzipskizze einer Bodenfräseinrichtung;
- Fig. 3: eine erste Ausführungsform einer Fluidaustrageinrichtung;
- Fig. 4: eine zweite Ausführungsform einer Fluidaustrageinrichtung;
- Fig. 5: eine dritte Ausführungsform einer Fluidaustrageinrichtung;
- Fig. 6: eine Draufsicht auf ein Arbeitsareal der Bodenfräsmaschine;
- Fig. 7: ein Ablaufdiagramm eines Verfahrens zum Steuern des Betriebs einer Fluidaustrageinrichtung einer Bodenfräsmaschine; und
- Fig. 8A bis 8E: Verläufe verschiedener Betriebsparameter einer Bodenfräsmaschine im Vergleich zueinander.

Gleiche beziehungsweise gleich wirkende Bauteile sind in den Figuren mit den gleichen Bezugszeichen bezeichnet. Sich wiederholende Bauteile sind nicht notwendigerweise in jeder Figur gesondert bezeichnet.

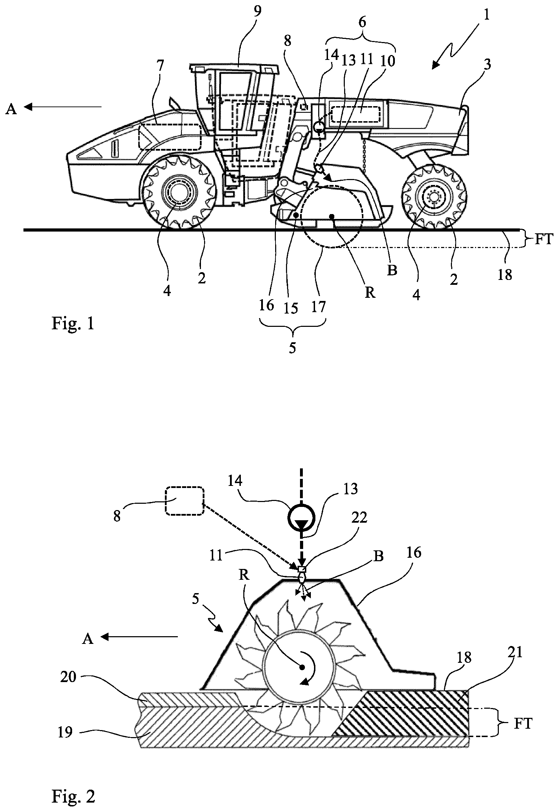

Figur 1 zeigt eine Bodenfräsmaschine 1 in einer Seitenansicht. Bei der Bodenfräsmaschine kann es sich um einen Stabilisierer oder Recycler handeln. Die Bodenfräsmaschine 1 kann Fahreinrichtungen 2, insbesondere Räder und/oder Kettenlaufwerke, einen Maschinenrahmen 3, Fahrantriebseinrichtungen 4, beispielsweise in Form von Hydromotoren, eine Bodenfräseinrichtung 5, eine Fluidaustrageinrichtung 6, ein Primärantriebsaggregat 7 sowie eine Steuereinrichtung 8 umfassen. Die Bedienung der Bodenfräsmaschine kann von einem Fahrstand 9 aus erfolgen. Dieser kann höhenverstellbar sein (in der Fig. 1 ist die abgesenkte Fahrerkabine gestrichelt angedeutet). Der Maschinenrahmen 3 kann einen Vorderwagen und einen Hinterwagen umfassen, die über ein Knickgelenk miteinander verbunden sind.

Der Aufbau und die Funktionsweise der Fluidaustrageinrichtung 6 wird nachstehend noch näher erläutert, insbesondere auch anhand der nachstehend noch näher beschriebenen Ausführungsbeispiele. Teil der Fluidaustrageinrichtung 6 sind eine Fluidquelle 10 und eine Fluidauslasseinrichtung 11. Diese können über eine Fluidförderleitung 13 miteinander verbunden sein. Von der Fluidquelle 10 bis zur Fluidauslasseinrichtung 11 kann das Fluid innerhalb der Fluidleitung 13 mithilfe einer Fluidförderpumpe 14 gefördert werden. An der Fluidauslasseinrichtung 11 kann das Fluid beispielsweise in einen Fräswalzenkasteninnenraum 15 aus der Fluidaustrageinrichtung 6 austreten (Fluidaustrittsrichtung B in der Fig. 1). Dazu kann die Fluidauslasseinrichtung 11 beispielsweise als eine oder mehrere Fluiddüsen ausgebildet sein.

Der Fräswalzenkasteninnenraum 15 kann in Vertikalrichtung nach unten zum Bodenuntergrund 18 hin offen ausgebildet sein und durch einen Fräswalzenkasten 16 zu den Seiten und nach oben hin begrenzt werden. Der Fräswalzenkasten 16 kann kasten- und/oder haubenartig ausgebildet sein und neben im Wesentlichen zueinander ortsfesten Wandelementen zusätzlich auch relativ hierzu höhenverstellbare Wandelemente ausweisen, wie beispielsweise sogenannte Seitenschilde und, insbesondere einen oder mehrere vordere und/oder hintere, Abstreifschilde. Im Fräswalzenkasteninnenraum 15 ist eine Fräswalze 17 angeordnet. Diese ist um eine Rotationsachse R rotierbar. Dazu ist ein in den Figuren nicht näher dargestellter Fräswalzenantrieb bzw. Fräswalzenantriebsstrang vorgesehen. Bei der Fräswalze kann es sich um ein im Wesentlichen hohlzylindrisches Tragrohr handeln, auf dessen Außenmantelfläche eine Vielzahl vom Fräswerkzeugen angeordnet ist. Im Fräsbetrieb greift die Fräswalze 17 mit einer Frästiefe FT in den Bodenuntergrund 19 ein und fräst und/oder durchmischt dabei das Bodenmaterial.

Fig. 2 verdeutlicht in einer Prinzipskizze weitere Details der Bodenfräsmaschine 1, insbesondere der Bodenfräseinrichtung 5 und der Fluidaustrageinrichtung 6 sowie eines möglichen Einsatzszenarios.

Links in der Fig. 2 befindet sich noch zu bearbeitender Boden. Dieser umfasst neben dem Bodenmaterial 19 einen auf der Oberfläche des Bodenmaterials ausgebrachten, beispielsweise pulverförmigen, Zuschlagstoff 20, beispielsweise Kalk und/oder Zement. Wird dieser Bereich in Arbeits- bzw. Vorwärtsrichtung der Bodenfräsmaschine 1 von der Bodenfräseinrichtung 5 überfahren, wird das Bodenmaterial 19 in der Frästiefe FT zusammen mit der Schicht Zuschlagstoff 20 aufgefräst. Im vorliegenden Ausführungsbeispiel ist die Fluidauslasseinrichtung 11 ferner derart positioniert, dass das aus ihr austretende Fluid in den Fräswalzeninnenraum 15 eingedüst wird und dort zusammen mit den aufgefrästen Anteilen des Bodenmaterials 19 und dem Zuschlagstoff 20 vermengt wird. Das erzeugte verarbeitete Fräsgut aus Bodenmaterial, Zuschlagstoff und zugesetztem Fluid kann beispielsweise im Fräsbett verbleiben.

Im Bereich der Fluidförderleitung 13 ist zwischen der Fluidförderpumpe 14 und der Fluidauslasseinrichtung 11 eine Ventileinrichtung 22 angeordnet. Diese kann zwischen einer Sperrstellung, in der sie eine fluidleitende Verbindung zur Fluidauslasseinrichtung 11 sperrt, und einer Auslassstellung, in der sie eine fluidleitende Verbindung zur Fluidauslasseinrichtung 11 freigibt, verstellt werden. Die Ventileinrichtung 22 kann somit ein oder mehrere Sperrventile oder anderen Sperreinrichtungen umfassen. Es ist auch möglich, dass die Fluidauslasseinrichtung 11, insbesondere die Ventileinrichtung 22, in verschiedenen Auslassstellungen positionierbar bzw. einstellbar ist, insbesondere im Bereich zwischen einer minimalen und einer maximalen Auslassstellung. Die Ver- und Einstellung einer Auslassstellung innerhalb dieses Bereiches kann auch stufenlos erfolgen. Die Ventileinrichtung 22 bzw. die Einstellposition der Ventileinrichtung 22 kann von der Steuereinrichtung 8 über eine geeignete Steuerleitung 12 gesteuert werden.

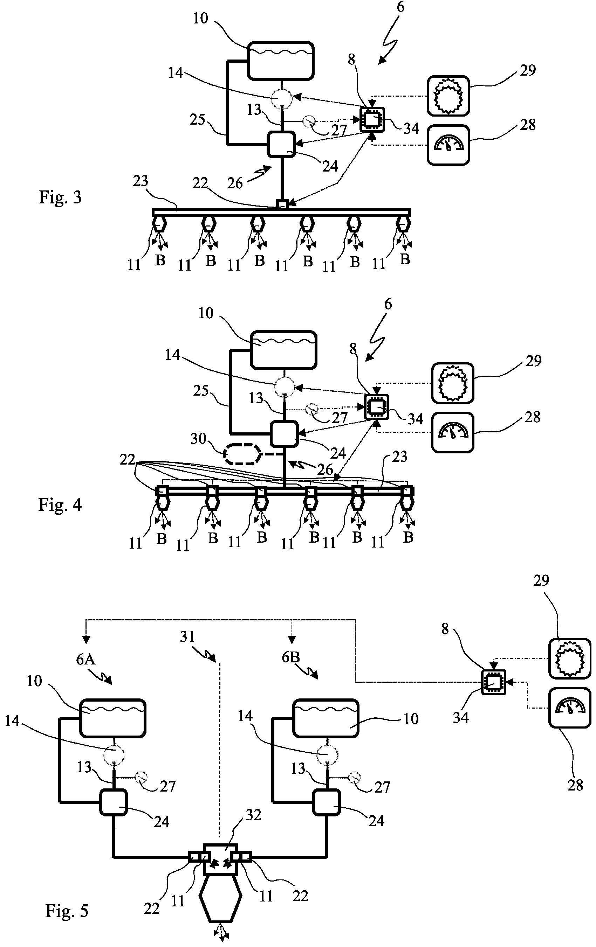

In den Figuren 3 bis 5 werden verschiedene Ausführungsbeispiele der Fluidaustrageinrichtung 6 gezeigt.

Gemäß Fig. 3 kann es vorgesehen sein, dass von der Fluidquelle 10 bis hin zu der Fluidauslasseinrichtung 11, bei der es sich vorliegend um mehrere an einem Sprühbalken 23 angeordnete Sprühdüsen handelt, eine fluidleitende Fluidförderleitung 13 vorhanden ist. In der Fluidförderleitung 13 ist eine Fluidförderpumpe 14 angeordnet, die Fluid aus der Fluidquelle 10 in Richtung zur Fluidauslasseinrichtung 11 fördert. Bei der Fluidquelle 10 kann es sich um einen mit der Bodenfräsmaschine 1 mitgeführten Fluidtank oder auch um eine Anschlussstelle der Bodenfräsmaschine 1 zur Verbindung derselben mit einem Fluidversorgungsfahrzeug, beispielsweise einem Wasserwagen, handeln.

Im vorliegenden Ausführungsbeispiel gemäß Fig. 3 zentral vor dem Eintritt des Fluids in den Sprühbalken 23 ist die Ventileinrichtung 22 angeordnet. Befindet sich die eine Ventileinrichtung 22 in ihrer Sperrstellung, gelangt somit zu keiner der einzelnen Sprühdüsen der Fluidauslasseinrichtung 11 Fluid. Wird die Ventileinrichtung 22 dagegen in ihre Auslassstellung verstellt, werden zentral alle Sprühdüsen der Fluidauslasseinrichtung 11 mit Fluid versorgt bzw. tritt aus allen einzelnen Auslässen der Fluidauslasseinrichtung 11 Fluid in Fluidaustrittsrichtung B aus. Der Bereich der Fluidförderleitung 13 in Fluidförderrichtung zwischen der Fluidförderpumpe 14 und der Fluidauslasseinrichtung 11, insbesondere zumindest der Ventileinrichtung 22, wird auch als Förderbereich 26 bezeichnet. In diesem Bereich der Fluidförderleitung 13 besteht aufgrund der Pumpwirkung der Fluidfördereinrichtung 14 dann, wenn diese im Förderbetrieb ist, ein Überdruck gegenüber der Außenumgebung, vorzugsweise selbst dann, wenn sich die Ventileinrichtung 22 in der Auslassstellung befindet.

Das Ausführungsbeispiel umfasst ferner lediglich beispielhaft eine optionale Druckbegrenzungseinrichtung 24 in der Fluidförderleitung 13 stromabwärts der Fluidförderpumpe 14 und stromaufwärts der Ventileinrichtung 22. Auch in den weiteren Ausführungsbeispielen ist diese Druckbegrenzungseinrichtung 24 optional. Die Druckbegrenzungseinrichtung 24 ist im Förderbereich 26 der Fluidförderleitung 13 angeordnet, konkret zwischen der Fluidförderpumpe 14 und der Fluidauslasseinrichtung 11. Ferner ist eine Bypass-Leitung 25 vorhanden, die die Druckbegrenzungseinrichtung 25 mit der Fluidquelle 10, insbesondere beispielsweise einem von der Bodenfräsmaschine 1 mitgeführten Fluidtank, verbindet. Die Druckbegrenzungseinrichtung 24 ist derart ausgebildet, dass sie dann, wenn im Förderbereich bzw. insbesondere im Bereich zwischen der Fluidförderpumpe 14 und der Druckbegrenzungseinrichtung 25 eine Druckschwelle überschritten wird, Fluid in die Bypass-Leitung 25 ableitet, wodurch im vorliegenden Ausführungsbeispiel das Fluid wieder zur Fluidquelle 10 zurückgeführt wird. Bei der Druckbegrenzungseinrichtung 24 kann es sich somit beispielsweise um ein, insbesondere von der Steuereinrichtung 8 gesteuertes, Druckbegrenzungsventil handeln.

Im Förderbereich 26, insbesondere im Bereich der Fluidförderleitung 13 zwischen der Fluidförderpumpe 14 und der Druckbegrenzungseinrichtung 24, kann ferner ein Fluiddrucksensor 27 angeordnet sein, der den aktuellen Fluiddruck innerhalb dieses Bereiches der Fluidförderleitung 13 ermittelt und über eine geeignete Signalübertragungsleitung an die Steuereinrichtung 8 übermittelt.

Ferner können ein Fahrbetriebssensor 28 und/oder ein Frästiefensensor 29 vorhanden sein. Mithilfe des Fahrbetriebssensors 28 ist es möglich, zu ermitteln, ob sich die Bodenfräsmaschine 1 gerade in einem Fahrbetrieb befindet oder nicht. Dazu kann beispielswese ermittelt werden, ob ein Fahrbefehl über eine Bedieneinrichtung, beispielsweise einen Fahrhebel, eingegeben worden ist, und/oder ob sich eine oder mehrere der Fahreinrichtungen 2 bewegen und/oder ob sich die Bodenfräsmaschine 1 gegenüber der Außenumgebung bewegt. Der Frästiefensensor 29 ist dazu ausgebildet, die Frästiefe FT zu ermitteln und/oder zu überwachen und kann dazu beispielsweise ein oder mehrere, insbesondere kontaktlos messende, Abstandssensoren aufweisen, die den Abstand einer Referenzstruktur der Bodenfräsmaschine, deren Abstand zum Boden von der aktuellen Frästiefe abhängt, und/oder ein oder mehrere Wegmesseinrichtungen, beispielsweise für Aktoren zu Veränderung der Hublage der Fräseinrichtung gegenüber dem Bodenuntergrund und/oder gegenüber einer Referenzstruktur der Bodenfräsmaschine, aufweisen.

Die Sensoren 27, 28 und/oder 29 können in Signalübertragungsverbindung mit der Steuereinrichtung 8 stehen, wie in der Fig. 3 mit den gestrichelt dargestellten Pfeilen gezeigt. Mithilfe der Sensoren bzw. der von den Sensoren ermittelten Betriebsparametern der Bodenfräsmaschine 1 kann die Steuerungseinrichtung 8 ermitteln, ob sich die Bodenfräsmaschine 1 während des Fräsbetriebs der Fräswalze in einem Stillstandbetrieb befindet bzw. sich gerade nicht über den Bodenuntergrund in Arbeits- bzw. Vorwärtsrichtung A bewegt, wie es beispielsweise dann der Fall ist, wenn die Fräswalze aus einer oberhalb der Bodenoberfläche befindlichen Transportposition in eine in den Bodenuntergrund mit der Frästiefe FT eingreifenden Fräsposition abgesenkt wird, oder in einem Arbeitsbetrieb befindet, in dem die Fräswalze in der Frästiefe FT in Vorwärts- bzw. in Arbeitsrichtung durch den Bodenuntergrund bewegt wird.

Die Steuereinrichtung 8 wiederum kann den Betrieb der Fluidförderpumpe 14, insbesondere hinsichtlich eines deaktivierten Zustandes und eines Förderbetriebes an sich und/oder, je nach Ausführungsform, hinsichtlich eines Schluckvolumens, einer Drehzahl oder ähnlichem, steuern. Die Steuereinrichtung 8 kann ferner derart ausgebildet sein, dass sie, sofern vorhanden, die Druckbegrenzungseinrichtung 24 steuert, beispielsweise hinsichtlich einer Aktivierung/Deaktivierung einer Ableitung von Fluid über die Bypass-Leitung 25 und/oder hinsichtlich einer Druckschwelle bzw. eines Druckschwellenwertes, ab dem eine Ableitung über die Bypass-Leitung 25 erfolgt. Die Steuereinrichtung 8 kann schließlich derart ausgebildet sein, dass sie die Position bzw. den Betriebszustand der Ventileinrichtung 22 zwischen der Sperrstellung und der Auslassstellung steuert.

Die durch die Steuereinrichtung 8 vorgegebenen Steuervorgaben können variieren, insbesondere abhängig von einer aktuellen Frästiefe FT. Es kann daher vorgesehen sein, dass die Steuereinrichtung 8 eine Berechnungseinheit 34 aufweist, umfassend ein Computerprogramm mit einem geeigneten Steueralgorithmus, einem Kennfeld oder ähnlichem, die zur Ermittlung aktueller Steuervorgaben ausgebildet ist.

Das Ausführungsbeispiel gemäß Fig. 4 unterscheidet sich von dem zu der Fig. 3 beschriebenen Ausführungsbeispiel einerseits im Wesentlichen darin, dass hier jeder einzelnen Sprühdüse des Sprühbalkens eine individuelle Ventileinrichtung 22 zugeordnet ist. Entsprechend können einzelne Auslassöffnungen bzw. Sprühdüsen der Fluidauslasseinrichtung 11 individuell gesperrt und/oder geöffnet werden.

Andererseits kann ein Fluiddruckspeicher 30 vorgesehen sein, der an den Förderbereich 26 die Fluidaustrageinrichtung 6, konkret beispielsweise im Bereich der Fluidförderleitung 13 zwischen der Fluidförderpumpe 14 und der Fluidauslasseinrichtung 11, angeschlossen ist. Bei dem Fluiddruckspeicher 30 handelt es sich insbesondere um einen Druckspeicher, der unter Druck mit Fluid beladen werden kann. Durch den Fluiddruckspeicher 30 wird somit ein Fluidreservoir auf der Druckseite stromabwärts der Fluidförderpumpe 14 innerhalb der Fluidförderleitung 13 erhalten, welches bei steigendem Innendruck, beispielsweise auch erst durch eine geeignete Ventileinrichtung gesteuert oberhalb einer Druckschwelle, mit Fluid gegen einen Ladedruck des Fluiddruckspeichers 30 gefüllt werden kann. Wird die Fluidauslasseinrichtung 11, insbesondere die Ventileinrichtung 22, von der Sperrstellung in die Auslassstellung verstellt, entlädt sich auch der Fluiddruckspeicher 30.

Aufbauend auf den Ausführungsbeispielen der Figuren 3 und 4 zeigt das Ausführungsbeispiel gemäß der Fig. 5 beispielhaft den Aufbau einer als Schaumbitumenanlage 31 ausgebildeten Fluidaustrageinrichtung. Diese umfasst letztendlich zwei einzelne Fluidaustrageinrichtungen 6, konkret eine erste Fluidaustrageinrichtung 6A für insbesondere Wasser und eine zweite Fluidaustrageinrichtung 6B für Bitumen. Hinsichtlich möglicher Ausgestaltungen dieser Fluidaustrageinrichtungen 6A und 6B wird auf die vorhergehenden Angaben Bezug genommen. Allerdings werden hier die aus den jeweiligen Fluidaustrageinrichtungen 6A und 6B austretenden Fluide, in der Regel Wasser und Bitumen, zunächst in einer Mischkammer 32 miteinander in Kontakt gebracht und das dabei entstehende Schaumbitumen wird anschließend über beispielsweise eine Schaumbitumendüse 33, insbesondere in den Fräswalzenkasteninnenraum 15, abgeleitet. Die Ventileinrichtungen 22 befinden sich am Eintritt in diese Mischkammer 32.

Beide der Fluidaustrageinrichtungen 6A und 6B können gemeinsam von der Steuereinrichtung 8 gesteuert werden.

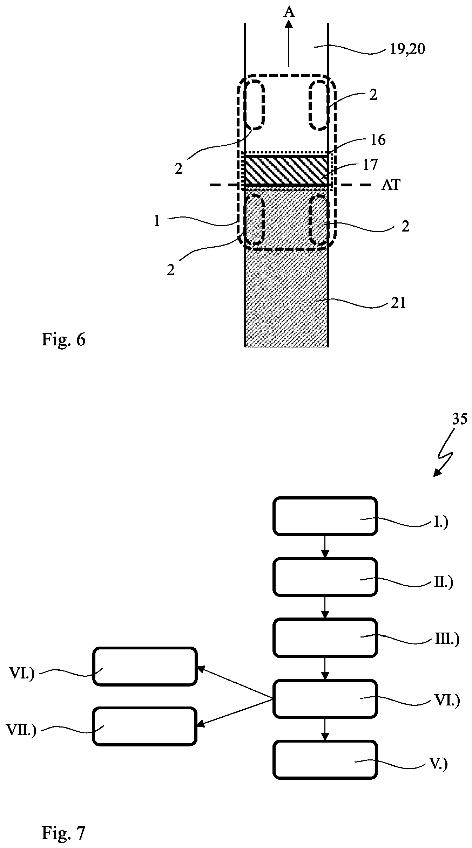

Fig. 6 veranschaulicht eine typische Betriebssituation einer Bodenfräsmaschine 1, insbesondere bei Stabilisierungs- und/oder Recyclingarbeiten, in einer Draufsicht. Häufig wird der zu bearbeitende Bodenuntergrund in mehreren, streifenartigen Abschnitten bearbeitet, die auch, wie in Fig. 6 gezeigt, stirnseitig aneinander anschließen können. Insofern besteht eine Ansetzstelle AT, an der sich ein bereits bearbeiteter Bodenbereich (in Fig. 6 Bereich 26) an einen noch unbearbeiteten Bereich (in Fig. 6 Bereich 19,20) anschließt. Es wird angestrebt, insbesondere auch im Bereich dieser Ansetzstelle ein hinsichtlich Feuchtigkeitsgehalt und Durchmischung des Bodenmaterials vergleichbares Ergebnis mit dem Bereich 21 und/oder mit dem sich an die Ansetzstelle AT in Arbeitsrichtung A anschließenden Bereich der Bodenbearbeitung zu erreichen. Üblicherweise wird die Bodenfräsmaschine 1 bei in Transportposition befindlicher Fräswalze zunächst an die Ansetzstelle manövriert. Bei sich im Stillstand befindlicher Bodenfräsmaschine 1 wird dann der Fräsbetrieb der Fräswalze aufgenommen, d.h. diese wird zunächst in Rotation um ihre Rotationsachse R versetzt und anschließend aus der Transportposition in ihre Fräsposition bis in eine Frästiefe FT abgesenkt. Die Bodenfräsmaschine 1 befindet sich dann nach wie vor im Stillstand bzw. im Stillstandbetrieb. Hat die Fräswalze 17 die Frästiefe FT erreicht, wird die Bodenfräsmaschine 1 aus dem Stillstand in Richtung ihrer Arbeitsrichtung A beschleunigt und schaltet dadurch von dem Stillstandbetrieb in den Arbeitsbetrieb um.

Um nun sicherzustellen, dass ausreichend Fluid auch bereits sofort zu Beginn des Arbeitsbetriebes zur Verfügung steht, also dann, wenn die Bodenfräsmaschine 1 vom Stillstandbetrieb in den Arbeitsbetrieb umschaltet und anfängt, sich bei fräsende Fräswalze in Arbeitsrichtung A zu bewegen, ist es vorgesehen, dass der Förderbereich 26 bzw. zumindest der Bereich der Fluidförderleitung 13 zwischen der Fluidförderpumpe 14 und der Ventileinrichtung 22 hydraulisch vorgespannt wird, wie nachstehend näher beschrieben.

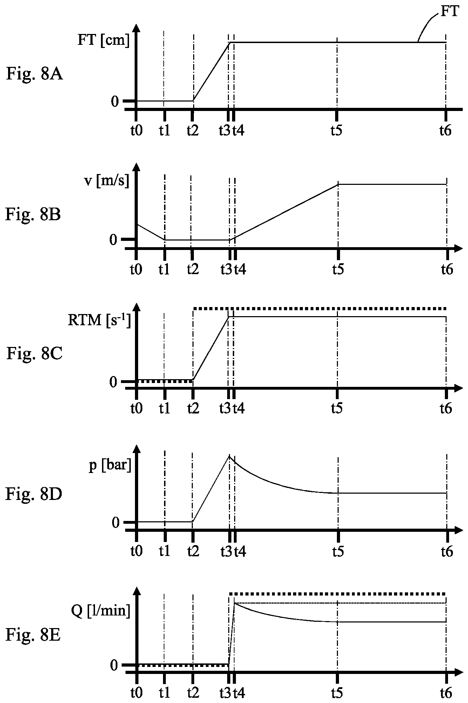

Fig. 7 veranschaulicht dazu ein Ablaufdiagramm eines Verfahrens 35 zum Steuern des Betriebs einer Fluidaustrageinrichtung 6 einer Bodenfräsmaschine 1, insbesondere somit einer Bodenfräsmaschine 1, wie in den vorhergehenden Figuren beispielhaft beschrieben. Die Figuren 8A bis 8E veranschaulichen schematisch und zum Teil überzeichnet hierzu Änderungen verschiedener Steuervorgaben und/oder Betriebsparameter, wie sie bei einer Durchführung des in den Fig. 7 gezeigten Verfahrens auftreten können. Fig. 8A veranschaulicht den Verlauf der Frästiefe, Fig. 8B den Verlauf der tatsächlichen Fahrgeschwindigkeit der Bodenfräsmaschine, Fig. 8C die Drehzahl der Fluidförderpumpe 14, Fig. 8D den Innendruck innerhalb der Fluidförderleitung 13 im Bereich stromabwärts der Fluidförderpumpe 14 und stromaufwärts der Ventileinrichtung 22 und Fig. 8E den Volumenstrom an Fluid durch die Fluidauslasseinrichtung 11. Ferner sind Zeitpunkte t0 bis t6 in den einzelnen Graphen angegeben.

In einem ersten Schritt des Verfahrens erfolgt ein Positionieren I. der in der Transportposition befindlichen Fräswalze an einer Ansetzstelle. Dies betrifft in den Graphen gemäß 8A bis 8E den Zeitraum t0 bis t1. Die Bodenfräsmaschine rangiert gemäß Fig. 8B und stoppt zum Zeitpunkt t1 in ihrer Position an der Ansetzstelle AT. Die Fluidförderpumpe 14 ist deaktiviert, so dass der Innendruck gemäß Fig. 8D gegenüber der Außenumgebung null ist und kein Fluid aus der Fluidauslasseinrichtung 11 austritt (Fig. 8E).

Im Schritt II. erfolgt nun ein Aktivieren des Fräsbetriebes. Die Fräswalze wird somit um ihre Rotationsachse R beschleunigt, bis sie zum Zeitpunkt t2 ihre Solldrehzahl erreicht hat. An den übrigen Parameter ändert sich zwischen t1 bis t2 nichts. Insbesondere befindet sich die Fräswalze nach wie vor in der Transportposition. Die Bodenfräsmaschine 1 an sich befindet sich im Stillstandbetrieb.

Zum Zeitpunkt t2 beginnt das Absenken III.) der Fräswalze aus der Transportposition in die Fräsposition bis in eine definierte Frästiefe FT zum Zeitpunkt t3. Dies bedeutet, dass die Fräswalze bis auf die Frästiefe FT abgesenkt wird und in den Boden eingreift. Die Bodenfräsmaschine befindet sich nach wie vor im Stillstandbetrieb.

Gemäß Fig. 8C nimmt die Fluidförderpumpe 14 jedoch bereits zum Zeitpunkt t2 ihren Förderbetrieb auf bzw. wird gemäß Schritt IV.) aktiviert, wie durch den Wechsel der gestrichelten Linie in der Fig. 8C veranschaulicht. Dies kann grundsätzlich irgendwann zwischen t0 bis t3 erfolgen. Dadurch steigt der Druck (Fig. 8D) innerhalb der Fluidförderleitung 13 bzw. im Förderbereich 26 zwischen der Fluidförderpumpe und der nach wie vor in der Sperrstellung befindlichen Ventileinrichtung 22. In dieser Phase wird die Fluidaustrageinrichtung 6 somit vorgespannt, denn es erfolgt noch kein Fluidaustritt über die Fluidauslasseinrichtung 11 (Fig. 8E). Bis zu welcher Drehzahl und/oder welchem Innendruck die Fluidförderpumpe vorspannt, kann manuell vorgegeben, in Abhängigkeit von der aktuellen Frästiefe variiert oder fix durch die Steuerungseinheit 8 vorgegeben sein.

Zum Zeitpunkt t3 schließlich nimmt die Bodenfräsmaschine 1 ihren Fahrbetrieb in Arbeits- bzw. Vorwärtsrichtung A auf (Fig. 8B) und wechselt dadurch im Fräsbetrieb von dem Stillstandbetrieb in den Arbeitsbetrieb. Mit der Aufnahme des Arbeitsbetriebs erfolgt gemäß Schritt V.) ein Umschalten der Ventileinrichtung 22 von der Sperrstellung in die Freigabestellung in Abhängigkeit von der Aufnahme eines Fahrbetriebs der Bodenfräsmaschine und damit ein Austragen von Fluid über die Fluidauslasseinrichtung. Wird die Ventileinrichtung 22 von der Sperrstellung und die Auslassstellung verstellt (gestrichelte Linie in der Fig. 8E), steht aufgrund der bestehenden Vorspannung praktisch schlagartig von t3 bis t4 der volle Volumenstrom an aus der Fluidauslasseinrichtung austretendem Fluid zur Verfügung steht.

Im Zeitraum t4 bis t5 nähert sich das Gesamtsystem nun einem ab t5 eintretenden und im vorliegenden Beispiel bis t6 aufrechterhaltenen (d.h. beispielsweise dem Ende einer Frässpur) hinsichtlich der gezeigten Betriebsparameter im Wesentlichen konstanten Zustand an.

Insgesamt wird deutlich, dass durch die frühe Startphase des Förderbetriebs der Fluidförderpumpe bei gleichzeitig geschlossener Ventileinrichtung 22 zu Beginn des Arbeitsbetriebs sehr schnell der angestrebte Volumenstrom aus der Fluidauslasseinrichtung 11 zur Verfügung steht.

Der zwischen t4 und t5 gegenüber dem konstanten Volumenstrom zwischen t5 und t6 erfolgte überschüssige Volumenstrom kann beispielsweise unter Nutzung eines Fluiddruckspeichers noch quantitativ gesteigert werden.

Sofern eine Druckbegrenzungseinrichtung vorhanden ist, kann es vorgesehen sein, dass durch diese Fluid aus dem Förderbereich in einem Schritt VI.) abgeleitet wird, wenn ein Druckschwellenwert innerhalb des Förderbereiches überschritten wird.

Sofern ein Fluiddruckspeicher 30 vorhanden ist, kann es vorgesehen sein, dass dieser mit Fluid im Schritt VII. gefüllt wird, insbesondere dann, wenn die Fluidförderpumpe 14 im Schritt IV.) aktiviert wird.

Das erläuterte Ausführungsbeispiel des Verfahrens 35 kann auch zur Erzeugung von Schaumbitumen genutzt werden, wobei dann die erste Fluidaustrageinrichtung 6A und die zweite Fluidaustrageinrichtung 6B beide jeweils in einem der Fig. 7, insbesondere mit den in den Figuren 8A bis 8E veranschaulichten Verläufen, entsprechenden Verfahren gesteuert werden können.

### BEZUGSZEICHENLISTE

- 1: Bodenfräsmaschine
- 2: Fahreinrichtungen
- 3: Maschinenrahmen
- 4: Fahrantriebseinrichtung
- 5: Bodenfräseinrichtung
- 6: Fluidaustrageinrichtung
- 6A: erste Fluidaustrageinrichtung
- 6B: zweite Fluidaustrageinrichtung
- 7: Primärantriebsaggregat
- 8: Steuereinrichtung
- 9: Fahrstand
- 10: Fluidquelle
- 11: Fluidauslasseinrichtung
- 12: Steuerleitung
- 13: Fluidförderleitung
- 14: Fluidförderpumpe
- 15: Fräswalzenkasteninnenraum
- 16: Fräswalzenkasten
- 17: Fräswalze
- 18: Bodenuntergrund
- 19: Bodenmaterial
- 20: Zuschlagstoff
- 21: verarbeitetes Bodenmaterial
- 22: Ventileinrichtung
- 23: Sprühbalken
- 24: Druckbegrenzungseinrichtung
- 25: Bypass-Leitung
- 26: Förderbereich
- 27: Fluiddrucksensor
- 28: Fahrbetriebssensor
- 29: Frästiefensensor
- 30: Fluiddruckspeicher
- 31: Schaumbitumenanlage
- 32: Mischkammer
- 33: Schaumbitumendüse
- 34: Berechnungseinheit
- 35: Verfahren
- I.: Positionieren
- II.: Aktivieren des Fräsbetriebs
- III.: Absenken
- IV.: Aktivieren des Förderbetriebs
- V.: Umschalten
- VI.: Ableiten
- VII.: Befüllen
- A: Arbeits-/Vorwärtsrichtung
- B: Fluidaustrittsrichtung
- R: Rotationsachse
- FT: Frästiefe
- AT: Ansetzstelle

## Patentansprüche

1. Verfahren (35) zum Steuern des Betriebs einer Fluidaustrageinrichtung (6) einer Bodenfräsmaschine (1),
a) die Bodenfräsmaschine (1) umfassend
- einen von Fahreinrichtungen (2) getragenen Maschinenrahmen (3),
- eine die Fahreinrichtungen (2) wenigstens teilweise antreibende Fahrantriebseinrichtung (4),
- eine Bodenfräseinrichtung (5) mit einer innerhalb eines Fräswalzenkasteninnenraums (15) angeordneten, in einem Fräsbetrieb um einer Rotationsachse (R) drehbaren Fräswalze (17) zum Auffräsen und/oder Durchmischen des Bodenuntergrundes (18), wobei die Fräswalze (17) zwischen einer aus dem Bodenuntergrund (18) ausgehobenen Transportposition und einer in den Bodenuntergrund (18) eintauchenden Fräsposition verstellbar ist und
- die Fluidaustrageinrichtung (6);
b) die Fluidaustrageinrichtung (6) umfassend
- eine Fluidquelle (10),
- eine Fluidauslasseinrichtung (11),
- eine Fluidförderpumpe (14), die in einem Förderbetrieb Fluid von der Fluidquelle (10) in Richtung zur Fluidauslasseinrichtung (11) über eine Fluidförderleitung (13) fördert,
- eine Ventileinrichtung (22) in einem Förderbereich (26) der Fluidförderleitung (13) zwischen der Fluidförderpumpe (14) und der Fluidauslasseinrichtung (11), wobei die Ventileinrichtung (22) zwischen einer Sperrstellung und einer Auslassstellung verstellbar ist;
c) das Verfahren (35) umfassend die Schritte
I.) Positionieren der in der Transportposition befindlichen Fräswalze (17) an einer Ansetzstelle, II.) Aktivieren des Fräsbetriebes,
III.) Absenken der Fräswalze (17) aus der Transportposition in die Fräsposition bis in eine definierte Frästiefe (FT);
IV.) im Laufe der Schritte I.) bis III.) oder bei Erreichen der definierten und/oder vorgegebenen Frästiefe (FT) Aktivieren des Förderbetriebes der Fluidförderpumpe (14) bei in Sperrstellung befindlicher Ventileinrichtung (22);
V.) Umschalten der Ventileinrichtung (22) von der Sperrstellung in die Freigabestellung in Abhängigkeit von einer Aufnahme eines Fahrbetriebs der Bodenfräsmaschine (1) und Austragen von Fluid über die Fluidauslasseinrichtung (11).

2. Verfahren (35) gemäß Anspruch 1,
**dadurch gekennzeichnet,**
**dass** ein manuelles Vorgeben oder ein Ermitteln einer Normaldosiervorgabe, insbesondere eines Normalfluidstroms, erfolgt,
**dass** ein Ermitteln einer Startdosiervorgabe, insbesondere eines Startfluidstroms, in Abhängigkeit von der definierten und/oder vorgegebenen Frästiefe und/oder der Normaldosiervorgabe erfolgt, wobei die Startdosiervorgabe von der Normaldosiervorgabe abweicht, und dass in einem Schritt VI.) ein Wechseln von einem Betrieb der Fluidaustrageinrichtung (6) mit einem Fluidaustrag gemäß Startdosiervorgabe in einen Betrieb der Fluidaustrageinrichtung (6) mit einem Fluidaustrag gemäß Normaldosiervorgabe erfolgt.

3. Verfahren (35) gemäß einem der vorhergehenden Ansprüche,
**dadurch gekennzeichnet,**
**dass** eine Druckbegrenzungseinrichtung (24) in dem Förderbereich der Fluidförderleitung (13) zwischen der Fluidförderpumpe (14) und der Fluidauslasseinrichtung (11), insbesondere der Ventileinrichtung (22), vorhanden ist, und dass bei einem Überschreiten eines von der Druckbegrenzungseinrichtung (24) vorgegebenen Druckschwellenwertes
- der Förderbetrieb der Fluidförderpumpe (14) reduziert oder gestoppt wird und/oder
- von der Fluidförderpumpe (14) gefördertes Fluid über eine Bypass-Leitung aus der Fluidförderleitung (13) abgelassen wird.

4. Verfahren (35) gemäß Anspruch 3,
**dadurch gekennzeichnet,**
**dass** ein Verändern des Druckschwellenwertes in Abhängigkeit von der definierten und/oder vorgegebenen Frästiefe (FT) erfolgt.

5. Verfahren (35) gemäß einem der vorhergehenden Ansprüche,
**dadurch gekennzeichnet,**
**dass** die Aufnahme des Fahrbetriebes in Abhängigkeit von
- einem Fahrsteuerbefehl, insbesondere einer Fahrhebelauslenkung,
- einer Fahreinrichtungsbewegung,
- einer Bewegung der Bodenfräsmaschine (1) relativ zum Bodenuntergrund (18), detektiert wird.

6. Verfahren (35) gemäß einem der vorhergehenden Ansprüche,
**dadurch gekennzeichnet,**
**dass** im Schritt IV.) im Förderbereich der Fluidförderleitung (13) zwischen der Fluidförderpumpe (14) und der Fluidauslasseinrichtung (11), insbesondere der Ventileinrichtung (22), ein Befüllen eines Fluiddruckspeichers (30) erfolgt, und dass im Schritt V.) zusätzlich zum Fördern von Fluid durch die Fluidförderpumpe (14) ein Entleeren des Fluiddruckspeichers (30) erfolgt.

7. Verfahren (35) gemäß einem der vorhergehenden Ansprüche,
**dadurch gekennzeichnet,**
**dass** die Bodenfräsmaschine (1) zur Erzeugung von Schaumbitumen ausgebildet ist und zwei Fluidaustrageinrichtungen (6A, 6B) umfasst, die mit ihren Fluidauslasseinrichtungen (11) in eine Mischkammer (32) münden, wobei die zwei Fluidaustrageinrichtungen (6A, 6B) beide gemäß dem Verfahren (35) gemäß einem der Ansprüche 1 bis 6 gesteuert werden.

8. Bodenfräsmaschine (1) umfassend
- einen von Fahreinrichtungen (2) getragenen Maschinenrahmen (3),
- eine die Fahreinrichtungen (2) wenigstens teilweise antreibende Fahrantriebseinrichtung (4),
- eine Bodenfräseinrichtung (5) mit einer innerhalb eines Fräswalzenkasteninnenraums (13) angeordneten, in einem Fräsbetrieb um einer Rotationsachse drehbaren Fräswalze (17) zum Auffräsen und/oder Durchmischen des Bodenuntergrundes (18), wobei die Fräswalze (17) zwischen einer aus dem Bodenuntergrund (18) ausgehobenen Transportposition und einer in den Bodenuntergrund (18) eintauchenden Fräsposition verstellbar ist und
- eine Fluidaustrageinrichtung (6);
b) die Fluidaustrageinrichtung (6) umfassend
- eine Fluidquelle (10),
- eine Fluidauslasseinrichtung (11),
- eine Fluidförderpumpe (14), die in einem Förderbetrieb Fluid von der Fluidquelle (10) in Richtung zur Fluidauslasseinrichtung (11) über eine Fluidförderleitung (13) fördert,
- eine Ventileinrichtung (22) in einem Förderbereich der Fluidförderleitung (13) zwischen der Fluidförderpumpe (14) und der Fluidauslasseinrichtung (11), wobei die Ventileinrichtung (22) zwischen einer Sperrstellung und einer Auslassstellung verstellbar ist,
**dadurch gekennzeichnet,**
**dass** eine Steuereinrichtung (8) zur Steuerung des Betriebs der Fluidaustrageinrichtung (6) gemäß einem Verfahren (35) nach einem der Ansprüche 1 bis 7 ausgebildet ist.

9. Bodenfräsmaschine (1) gemäß Anspruch 8,
**dadurch gekennzeichnet,**
**dass** sie einen Fahrbetriebssensor (28), insbesondere einen Fahrhebelpositionssensor und/oder einen Fahreinrichtungsbewegungssensor, aufweist, der zur Ermittlung des Vorliegens eines Fahrbetriebes ausgebildet ist.

10. Bodenfräsmaschine (1) gemäß einem der Ansprüche 8 oder 9,
**dadurch gekennzeichnet,**
**dass** sie einen Frästiefensensor (29) aufweist, der zur Ermittlung einer definierten und/oder vorliegenden Frästiefe (FT) ausgebildet ist.

11. Bodenfräsmaschine (1) gemäß einem der Ansprüche 8 bis 10,
**dadurch gekennzeichnet,**
**dass** sie einen Fluiddrucksensor (27) umfasst, der derart ausgebildet ist, dass mit ihm ein in einem Bereich der Fluidförderleitung (13) zwischen der Fluidförderpumpe (14) und der Fluidauslasseinrichtung (11), insbesondere der Ventileinrichtung (22), bestehender Fluiddruck erfassbar ist.

12. Bodenfräsmaschine (1) gemäß einem der Ansprüche 8 bis 11,
**dadurch gekennzeichnet,**
**dass** in einem Bereich der Fluidförderleitung (13) zwischen der Fluidförderpumpe (15) und der Fluidauslasseinrichtung (11) , insbesondere der Ventileinrichtung (22), eine, insbesondere von der Steuereinrichtung (8) gesteuerte, Druckbegrenzungseinrichtung (24) vorhanden ist.

13. Bodenfräsmaschine (1) gemäß einem Anspruch 12,
**dadurch gekennzeichnet,**
**dass** eine Bypass-Leitung (25) vorhanden ist, über die Fluid aus einem Bereich der Fluidförderleitung (13) zwischen der Fluidförderpumpe (14) und der Fluidauslasseinrichtung (11), insbesondere unter Rückführung zur Fluidquelle (10), ablassbar ist.

14. Bodenfräsmaschine (1) gemäß einem der Ansprüche 8 bis 13,
**dadurch gekennzeichnet,**
**dass** die Steuereinrichtung (8) eine Berechnungseinheit (34) aufweist, die zum Berechnen
- einer Normaldosiervorgabe und/oder einer Startdosiervorgabe und/oder
- eines Druckschwellenwertes
in Abhängigkeit von einer definierten und/oder vorgegebenen Frästiefe (FT) ausgebildet ist.
